Europäisches Patentamt

European Patent Office

Office européen des brevets

(11) Publication number: **0 506 301 B1**

# EUROPEAN PATENT SPECIFICATION

(45) Date of publication of patent specification: **02.08.95**

(51) Int. Cl.⁶: **C04B 35/18**, C04B 38/00, B28B 3/20

(21) Application number: **92302385.7**

(22) Date of filing: **19.03.92**

(54) **Process of producing cordierite honeycomb structure.**

(30) Priority: **29.03.91 JP 93091/91**

(43) Date of publication of application:
**30.09.92 Bulletin 92/40**

(45) Publication of the grant of the patent:
**02.08.95 Bulletin 95/31**

(84) Designated Contracting States:
**BE DE FR GB IT SE**

(56) References cited:
**EP-A- 0 164 028**
**GB-A- 1 518 475**

(73) Proprietor: **NGK INSULATORS, LTD.**
**2-56, Suda-cho, Mizuho-ku**
**Nagoya City**
**Aichi Pref. (JP)**

(72) Inventor: **Kasai, Yoshiyuki**
**15, Takeda-cho 3-chome,**
**Mizuho-ku**
**Nagoya-shi,**
**Aichi-ken (JP)**
Inventor: **Kumazawa, Kazuhiko**
**34, Takemi-cho 1-chome,**
**Mizuho-ku**
**Nagoya-shi,**
**Aichi-ken (JP)**
Inventor: **Hamanaka, Toshiyuki**
**682-1, Minamiwakamatsu-cho**
**Suzuka-shi,**
**Mie-ken (JP)**
Inventor: **Itoh, Toshikazu**
**Jouei-Haitsu 301,**
**77, Ono-cho 1-chome**
**Kasugai-shi,**
**Aichi-ken (JP)**

(74) Representative: **Paget, Hugh Charles Edward et al**
**MEWBURN ELLIS**
**York House**
**23 Kingsway**
**London WC2B 6HP (GB)**

EP 0 506 301 B1

**Description**

**BACKGROUND OF THE INVENTION**

Field of the Invention

The present invention relates generally to a process of producing a honeycomb structure made of a cordierite composition, and more particularly to a technique suitable for controlling physical properties of such a cordierite honeycomb structure.

Discussion of the Prior Art

There is known a process of producing a honeycomb structure of a cordierite composition, which includes the steps of: preparing a batch of a cordierite material consisting of a mixture having a desired cordierite composition whose major components are talc, kaoline, calcined kaoline and alumina; forming by extrusion an unfired body having a desired configuration by using the prepared cordierite material batch; and firing the formed unfired body into the intended honeycomb structure. Such a cordierite honeycomb structure is widely used for various purposes owing to its high heat resistance, and low coefficient of thermal expansion over a wide range of temperature. A typical application of the cordierite honeycomb structure is found in the field of purifying exhaust emissions containing hydrocarbon, carbon monoxide, and oxides of nitrogen, in particular, as a honeycomb support for a catalyst used for purifying exhaust emissions from motor vehicle engines.

The required physical or material properties of the cordierite honeycomb structure vary depending upon the specific application. The properties that are typically considered important include the porosity or water absorption percent of the honeycomb walls, the coefficient of thermal expansion and thermal shock resistance of the honeycomb structure, and the firing shrinkage rate. Among these properties, the porosity or water absorption percent is recognized as the most important property, when the honeycomb structure is used as a honeycomb catalyst substrate in an exhaust emission purifying device for motor vehicles. In this respect, it is noted that the porosity or water absorption percent of a honeycomb structure depends on the distribution of pores in the porous walls of the honeycomb structure, which has a considerable influence on the manner in which an exhaust emission purifying catalyst and a catalyst activator are supported by the honeycomb structure. Accordingly, it is necessary to suitably control the porosity or water absorption percent of the porous walls of the honeycomb structure, for controlling the activity of the catalyst.

For improving the property of the cordierite honeycomb structure in terms of the porosity, various attempts have been made. For example, laid-open Publication No. 53-82822 of Japanese Patent Application discloses a process of producing a cordierite honeycomb structure, in which the particle sizes of the magnesia source materials such as talc, magnesium carbonate and magnesium hydroxide are controlled so as to control the coefficient of thermal expansion of the honeycomb structure produced, and to control the size of the pores in the honeycomb structure. More specifically, the above-identified publication indicates that the pore size of the honeycomb structure increases with an increase in the particle sizes of the magnesia source materials.

An extensive study by the present inventors revealed a drawback in the known process disclosed in the above-identified publication, in terms of the reproducibility of the cordierite honeycomb structure having desired physical properties. That is, a cordierite honeycomb structure is formed of a composition which contains various natural raw materials, such as talc used as the source material for magnesia. It was found difficult to produce the cordierite honeycomb structure with a high degree of consistency in the physical properties, such as the pore size and the porosity or water absorption percent, even if the particle sizes of the talc and other natural magnesia source materials in a cordierite material batch are controlled to obtain the desired pore size and thermal expansion coefficient according to the principle of the known process in question. The study indicates a high possibility of variation or inconsistency in the porosity or water absorption percent, thermal expansion coefficient, and other physical properties, even if the individual cordierite material hatches have the same particle sizes of talc and other magnesia source materials.

**SUMMARY OF THE INVENTION**

It is therefore an object of the present invention to provide a process of producing, with high reproducibility, a cordierite honeycomb structure having desired physical properties such as porosity or water absorption coefficient, which process is capable of suitably controlling or adjusting the water absorption percent and other properties.

According to the principle of this invention, there is provided a process of producing a cordierite honeycomb structure, comprising the steps of: (a) preparing a cordierite material batch whose major components consist of talc, kaoline, calcined kaoline and alumina which collectively provide a chemical composition consisting of 45-55% by weight of $SiO_2$, 32-40% by weight of $Al_2O_3$ and 12-15% by weight of MgO, the talc consisting of a mixture of a first talc powder having a content of CaO of not more than 0.4% by weight and a crystallite size of not larger than 10μm, and a second talc powder having a content of CaO of not more than 0.4% by weight and a crystallite size of not smaller than 30μm; (b) forming a green body of the cordierite honeycomb structure, by extrusion using the cordierite material batch; and (c) firing the green body into the cordierite honeycomb structure.

The present invention was based on a finding by the present inventors as a result of a further study on the individual components of the cordierite material batch which gives the intended cordierite honeycomb structure. The finding dictates that the origin of the natural talc as one major component of the batch has a significant influence on the water absorption percent of the cordierite honeycomb structure produced, and the crystallite size of the natural talc considerably affects the water absorption percent or porosity and other physical properties of the cordierite honeycomb structure.

According to the process of the present invention, the cordierite material batch is prepared by using major components consisting of talc, kaoline, calcined kaoline and alumina which cooperate to give a known chemical composition, namely, a composition consisting of 45-55% by weight of $SiO_2$, 32-40% by weight of $Al_2O_3$ and 12-15% by weight of MgO. It will be understood that the cordierite material batch may contain suitable additives other than the major components indicated above, for instance, aluminum hydroxide, silica and reclaimed cordierite material, depending upon the particular requirement. For example, the above major components provide more than 50% of the batch.

The cordierite material batch prepared according to this invention is characterized by the use of two talc powders whose crystallite size are different, so that the physical properties of the cordierite honeycomb structure produced can be controlled as needed. Described in detail, the first talc powder has the crystallite size of 10μm or smaller, while the second talc powder has the crystallite size of 30μm or larger. These two talc powders are used in an appropriate proportion depending upon the required properties of the honeycomb structure. The two talc powders are available from various origins. For example, talc for the first talc powder whose crystallite size is 10μm or smaller is available from the State of Montana, U.S.A., and Australia, while talc available from the Liaoning Province, the People's Republic of China has a considerably large crystallite size and can be suitably used according to the present invention as the second talc powder whose crystallite size is 30μm or larger.

The first and second talc powders both have a CaO content not exceeding 0.4% by weight, since the CaO content exceeding 0.4% will cause the cordierite honeycomb structure produced to have an excessively high coefficient of thermal expansion and an insufficiently low degree of thermal shock resistance, whereby the honeycomb structure cannot serve its function.

The proportion or ratio of these two talc powders having the different crystallite sizes is suitably determined according to the desired properties of the cordierite honeycomb structure. Generally, the proportion is selected over a wide range between 1/99 and 99/1 by weight.

By using the thus prepared cordierite material batch, a green body of the cordierite material batch honeycomb structure is formed by extrusion, and the formed green body is fired into the cordierite honeycomb structure. The cordierite material batch may include a suitable plasticizing aid, so that the plasticized batch is easily formed by an extruding press, into a desired green honeycomb body. The green honeycomb body is dried, and is then fired according to a suitable temperature-time pattern. For instance, the dried green honeycomb body is first heated to 1100°C at a rate not exceeding 250°C/hour, then heated to a firing temperature of 1350-1440°C at a rate of 30°C/hour to 300°C/hour, and finally held at the firing temperature for a time ranging from 0.5 hour to 24 hours. Thus, the cordierite honeycomb structure having the suitably controlled properties is produced.

## BRIEF DESCRIPTION OF THE DRAWINGS

The above and optional objects, features and advantages of the present invention will be better understood by reading the following description of some examples of the invention, when considered in connection with the accompanying drawings, in which:

Fig. 1 is a graph indicating a relationship between the water absorption percent of a honeycomb structure prepared in Example 1 and a ratio of talc A/talc B used for the honeycomb structure;

Fig. 2 is a graph indicating a relationship between the thermal expansion coefficient of the honeycomb structure of Example 1 and the talc A/talc B ratio;

Fig. 3 is an explanatory view showing axes A and B of the honeycomb structure of Example 1; and

Fig. 4 is a graph indicating a relationship between the thermal shock resistance of the honeycomb structure of Example 1 and the talc A/talc B ratio.

## DETAILED DESCRIPTION OF THE INVENTION

To further clarify the concept of this invention, there will be described some examples of the invention, for illustrative purpose only.

Various specimens of the cordierite honeycomb structures were prepared in Examples 1 and 2 below, using respective mixtures of talc, kaoline, calcined kaoline and alumina, whose contents (% by weight) are indicated in TABLE 1 below. Seven different talc powders A-G, which were used in combination for the various specimens, are specified in TABLE 2 below, in terms of the average particle size of the powders, the crystallite size of the talc ore, and the chemical composition. The average particle size was measured by Sedigraph (available from Micromeritics, U.S.A.). Since the size of the crystallite of the ores for the talc materials C, D, F and G was extremely large, the thickness of a thin flake perpendicular to a cleavage surface of the ores was measured by optical microscopic photography, and the measured thickness values are indicated in TABLE 2 as the crystallite size of the talc materials C, D, F and G. It is therefore noted that the actual crystallite sizes of the talc materials C, D, F and G are larger than those in TABLE 2.

Generally, the particles of the talc materials A, B and E whose crystallite sizes are relatively small are polycrystalline, while the particles of the talc materials C, D, F and G whose crystallite sizes are relatively large take the form of crystallites which are cracked into fragments along the cleavage surface of the ores.

[TABLE 1]

| Components | Talc | Kaoline | Calcined Kaoline | Alumina |
|---|---|---|---|---|
| Contents (wt.%) | 39.1 | 27.4 | 20.0 | 13.5 |

[TABLE 2]

| | Origin | Average Particle Size($\mu$m) | Crystallite Size ($\mu$m) of Ores | Composition (wt. %) | | | |
|---|---|---|---|---|---|---|---|
| | | | | $SiO_2$ | $Al_2O_3$ | MgO | CaO |
| A | Montana, U.S.A. | 14 | 8 | 61.29 | 0.72 | 31.25 | 0.13 |
| B | Ditto | 11 | 5 | 60.81 | 0.98 | 31.15 | 0.17 |
| C | Liaoning, China | 12 | 40 | 62.85 | 0.49 | 31.87 | 0.23 |
| D | Ditto | 10 | 50 | 62.92 | 0.05 | 31.90 | 0.26 |
| E | Australia | 12 | 8 | 62.71 | 0.51 | 30.31 | 0.29 |
| F | Liaoning, China | 14 | 60 | 62.53 | 0.32 | 31.04 | 0.22 |
| G | Ditto | 11 | 45 | 60.35 | 0.14 | 32.62 | 0.48 |

## EXAMPLE 1

Six cordierite material batches Nos. 1-6 were prepared by using the talc material A and/or talc material C, in the proportions indicated in TABLE 3. The powdered talc materials A and C which have different crystallite sizes as indicated in TABLE 2 were mixed with the other materials of the cordierite composition, namely, kaoline, calcined kaoline and alumina, so as to give the chemical composition as indicated in TABLE 1. For each batch, 3 parts by weight of methyl cellulose was added as an organic binder, per 100 parts by weight of the cordierite composition. The chemical compositions of the kaoline, calcined kaoline

4

and alumina used are indicated in TABLE 4.

[TABLE 3]

| Batch No. | 1 | 2 | 3 | 4 | 5 | 6 |
|---|---|---|---|---|---|---|
| Talc A (parts by weight) | 0 | 20 | 30 | 50 | 70 | 100 |
| Talc C ( " ) | 100 | 80 | 70 | 50 | 30 | 0 |

[TABLE 4]

| | Chemical Composition (wt. %) | | | | |
|---|---|---|---|---|---|
| | $SiO_2$ | $Al_2O_3$ | MgO | CaO | Ig-Loss |
| Kaoline | 46.1 | 38.5 | - | - | 13.7 |
| Calcined Kaoline | 52.6 | 44.6 | - | - | - |
| Alumina | - | 99.6 | - | - | - |

The thus prepared cordierite material batches Nos. 1-6 were used to form, by ordinary extrusion method, respective green honeycomb bodies each having a diameter of 118mm, a length of 102mm, a honeycomb wall thickness of 150μm, and about 62 cells per 1cm² of cross sectional area. The green honeycomb bodies were dried, and fired at 1400°C for three hours. Thus, the specimens of the cordierite honeycomb structure each containing the talc material A and/or the talc material B were produced.

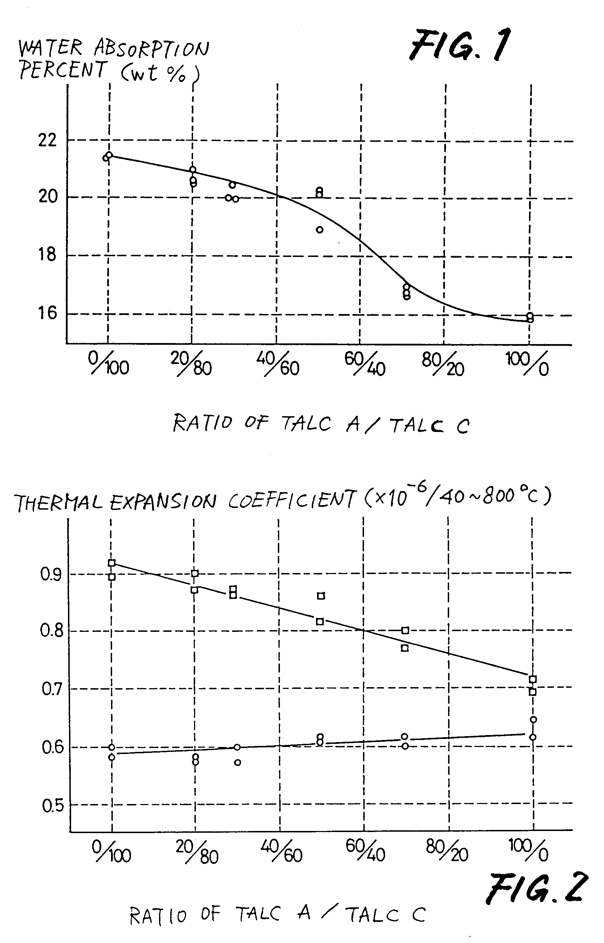

A simulation test for measuring the water absorption percent of the specimens as a catalyst support was conducted, with the specimens submerged in a water bath at 30°C for two minutes. The specimens taken out of the water bath were exposed to an air blow of 1.4kgf (0.137 MPa) per square centimeter (1 cm²), to blow off the excess water from the surfaces of the specimens. Then, the weights of the specimens which include the weight of the water absorbed by the honeycomb structure after the exposure to the air blow were measured. For each test specimen, a difference between the measured weight of the water-containing specimen and the weight of the dry specimen was calculated, to calculate the water absorption percent, which is equal to (calculated difference/dry weight) x 100. The result of the simulation test is indicated in the graph of Fig. 1.

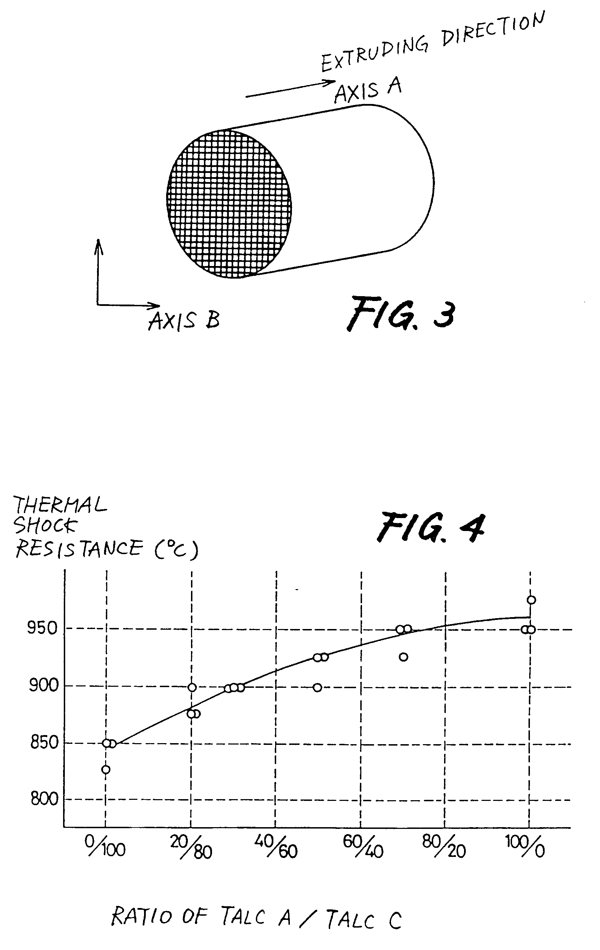

The specimens were also subjected to measurements of the coefficient of thermal expansion (CTE) over a length of 50mm, along the axis A parallel to the direction of extrusion of the honeycomb body, and along the axis B perpendicular to the Axis A. The Axes A and B are shown in Fig. 3. The measured CTE values are indicated in the graph of Fig. 2, wherein circles represent the CTE values along the Axis A, while rectangles represent the CTE values along the Axis B.

The specimens were further tested for thermal shock resistance. In the test, each specimen was held in an electric furnace for 20 minutes at a test temperature higher than 700°C. The test temperature was elevated in increments of 25°C after each test cycle wherein the specimen held at each test temperature was removed from the furnace for exposure to the room temperature, and the removed specimen was checked for cracking. The test temperature at which the cracking occurred was indicated in the graph of Fig. 4 as the thermal shock resistance. The cracking was confirmed by a so-called "ringing method", i.e., by a change in the nature of the sound generated when the specimen removed from the furnace was tapped.

It will be understood from the graph of Fig. 1 that the water absorption percent of the honeycomb structure increases with an increase in the weight ratio of the talc material C having the relatively large crystallite size to the talc material A having the relatively small crystallite size. Since the average particle sizes of the powdered talc materials A and C are almost the same, the average particle size of the total talc content does not considerably vary with a change in the proportion or ratio of the talc materials A and C.

EP 0 506 301 B1

Therefore, it is considered that the water absorption percent of the honeycomb structure varies with the size of the average crystallite size of the total talc content.

It will be understood from the graph of Fig. 2 that the CTE value of the honeycomb structure along the Axis A slightly increases with an increase in the weight ratio of the talc material A having the relatively small crystallite size to the talc material C, while the CTE value along the Axis B decreases with the increase in the weight ratio of the talc material A. It will also be understood from the graph of Fig. 4 that the thermal shock resistance increases as the weight ratio of the talc material A having the relatively small crystallite size increases, that is, as the difference between the CTE values along the Axes A and B decreases as indicated in Fig. 2. This phenomenon appears to occur due to reduction in the thermal stress of the honeycomb structure with the decrease in the difference between the CTE values along the Axes A and B.

It will be understood that the water absorption percent (porosity), thermal shock resistance and other properties of the cordierite honeycomb structure can be suitably controlled by changing the proportion of the two talc materials A and C having considerably different crystallite sizes.

**EXAMPLE 2**

As shown in TABLE 5, twelve cordierite material batches Nos. 1-12 were prepared by using different combinations of first and second powdered talc materials selected from the materials A-G in TABLE 2. For each batch, the total talc content consists of 70 parts by weight of the first talc material and 30 parts by weight of the second talc material. The first and second talc materials having different crystallite sizes were mixed with the other materials (whose chemical composition is indicated in TABLE 4) of the cordierite composition, so as to give the chemical composition as indicated in TABLE 1. For each batch, 3 parts by weight of methyl cellulose was added as an organic

6

[TABLE 5]

| Batch No. | | 1 | 2 | 3 | 4 | 5 | 6 | 7 | 8 | 9 | 10 | 11 | 12 |
|---|---|---|---|---|---|---|---|---|---|---|---|---|---|
| First Talc Material 70 parts | Kind | A | A | A | A | A | A | C | C | C | C | C | C |
| | Crystallite Size *1 | S | S | S | S | S | S | L | L | L | L | L | L |
| Second Talc Material 30 parts | Kind | B | C | D | E | F | G | A | B | D | E | F | G |
| | Crystallite Size *1 | S | L | L | S | L | L | S | S | L | S | L | L |

*1: S = relately small

L = Relatively large

Batch No. 1, 4, 6, 9, 11 and 12 are out of the scope of the invention.

binder, per 100 parts by weight of the cordierite composition. The thus prepared cordierite material batches Nos. 1-12 were used to form by ordinary extrusion method respective green honeycomb bodies as shown in Fig. 3, each having a diameter of 118mm, a length of 102mm, a honeycomb wall thickness of 150$\mu$m, and about 62 cells per 1cm$^2$ of cross sectional area. The green honeycomb bodies were dried, and fired at 1400°C for three hours. Thus, the specimens of the cordierite honeycomb structure each containing the first and second talc materials were produced.

The thus produced specimens were tested for the water absorption percent, coefficient of thermal expansion and thermal shock resistance, as in EXAMPLE 1. The results of the tests are indicated in TABLE 6.

It will be understood from TABLE 6 that the specimen Nos. 1 and 4 using the first and second talc materials both having relatively small crystallite sizes have almost the same water absorption percent, and the specimen Nos. 9, 11 and 12 using the first and second talc materials both having relatively large crystallite sizes also have almost the same water absorption percent. The second talc material in specimen no. 6 has a high CaO content. It will also be understood that the other specimens using the first and second talc materials having different crystallite sizes exhibit different water absorption percent values. This means that the water absorption percent of the honeycomb structure can be controlled by suitably selecting the

[TABLE 6]

| Batch No. | Water Absorption Percent (%) | Coefficient of Thermal Expansion | | Thermal Shock Resistance(°C) |
|---|---|---|---|---|
| | | Axis A | Axis B | |
| 1 | 16.0 | 0.63 | 0.72 | 958 |
| 2 | 16.9 | 0.60 | 0.80 | 942 |
| 3 | 17.0 | 0.62 | 0.79 | 942 |
| 4 | 16.2 | 0.64 | 0.71 | 967 |
| 5 | 17.1 | 0.59 | 0.70 | 933 |
| 6 | 16.9 | 0.91 | 1.05 | 767 |
| 7 | 20.5 | 0.60 | 0.86 | 900 |
| 8 | 20.7 | 0.58 | 0.86 | 908 |
| 9 | 21.8 | 0.60 | 0.93 | 842 |
| 10 | 20.4 | 0.58 | 0.87 | 900 |
| 11 | 21.6 | 0.59 | 0.90 | 833 |
| 12 | 21.8 | 0.96 | 1.11 | 742 |

crystallite sizes of the first and second talc materials as major component of the cordierite composition, such that the crystallite sizes of the two talc materials are considerably different from each other. The water absorption percent can be easily controlled where the crystallite size of one of the two talc materials is selected so as not to exceed 10$\mu$m, while the crystallite size of the other talc material is selected to be at least 30$\mu$m.

Further, the coefficient of thermal expansion of the honeycomb structure can be controlled to some extent, by using the two talc materials having considerably different crystallite sizes. If the crystallite sizes of the two talc materials are both relatively large, the difference between the thermal expansion coefficients along the Axes A and B tends to be large. On the other hand, the difference tends to be small if the crystallite sizes of the two talc materials are both relatively small. It will therefore be understood that the thermal expansion coefficient can be controlled by changing the weight ratio of the two talc materials having a relatively large difference in the crystallite size, so that the difference between the thermal expansion coefficients along the Axes A and B falls within a range of the differences which would be obtained with the two talc materials both having relatively small crystallite sizes and the two talc materials both having relatively large crystallite sizes.

It is noted that the thermal stress of the honeycomb structure is influenced by the specific combination of the two talc materials. Namely, the thermal shock resistance of the honeycomb structure tends to be low where the crystallite sizes of the two talc materials are both relatively large, while the thermal shock resistance tends to be high where both the two talc materials have relatively small crystallite sizes. However, the contents of CaO of the two talc materials should not exceed 0.4% by weight, since the coefficient of thermal expansion of the honeycomb structure will be excessively large, resulting in considerable reduction in the thermal shock resistance. The talc materials whose CaO content exceeds 0.4% by weight cannot be used for the cordierite composition for the honeycomb structure.

It will be understood from the foregoing description that the cordierite honeycomb structure is produced by using a cordierite material batch which includes two talc materials which have a relatively large difference in the crystallite size and whose CaO contents do not exceed 0.4% by weight, and that the water absorption percent (porosity), thermal shock resistance and other properties of the cordierite honeycomb structure can be effectively controlled by changing the ratio or proportion of the two talc materials, which are used as a major component of the cordierite composition which gives the honeycomb structure. The process according to the present invention permits production of a cordierite honeycomb structure having desired physical properties, with high reproducibility or consistency in terms of the properties, assuring high stability in the quality of the honeycomb structure produced. In this respect, the present invention is industrially significant.

**Claims**

1. A process of producing a cordierite honeycomb structure, comprising the steps of:

     preparing a cordierite material batch whose major components consist of talc, kaoline, calcined kaoline and alumina which collectively provide a chemical composition consisting of 45-55% by weight of $SiO_2$, 32-40% by weight of $Al_2O_3$ and 12-15% by weight of MgO, said talc consisting of a mixture of a first talc powder having a content of CaO of not more than 0.4% by weight and a crystallite size of not larger than 10$\mu$m, and a second talc powder having a content of CaO of not more than 0.4% by weight and a crystallite size of not smaller than 30$\mu$m;

     forming a green body of said cordierite honeycomb structure, by extrusion using said cordierite material batch; and

     firing said green body into said cordierite honeycomb structure.

2. A process according to any one of claims 1 or 2, wherein said step of firing said green body comprises heating said green body to 1100°C at a rate not exceeding 250°C/hour, then heating said green body to a firing temperature of 1350-1440°C at a rate of 30°C/hour to 300°C/hour, and finally holding said green body at the firing temperature for a time of 0.5 hour to 24 hours.

**Patentansprüche**

1. Verfahren zur Herstellung einer Cordierit-Wabenstruktur, umfassend die Schritte: Herstellen eines Cordierit-Material-Ansatzes, dessen Hauptkomponenten aus Talk, Kaolin, kalziniertem Kaolin und Tonerde bestehen, die gemeinsam eine chemische Zusammensetzung ergeben, die aus 45 - 55 Gew.-% $SiO_2$, 32 - 40 Gew.-% $Al_2O_3$ und 12 - 15 Gew.-% MgO besteht, wobei der Talk aus einem Gemisch aus einem ersten Talkpulver, mit einem CaO-Gehalt von nicht mehr als 0,4 Gew.-% und einer Kristalliten-Größe von nicht über 10 $\mu$m, und aus einem zweiten Talkpulver mit einem CaO-Gehalt von nicht mehr als 0,4 Gew.-% und einer Kristalliten-Größe von nicht unter 30 $\mu$m besteht;

     Formen eines Grünkörpers für die Cordierit-Wabenstruktur durch Extrudieren unter Verwendung des Cordierit-Material-Ansatzes; und

     Brennen des Grünkörpers zur Cordierit-Wabenstruktur.

2. Verfahren nach Anspruch 1, worin der Schritt des Brennens des Grünkörpers das Erhitzen des Grünkörpers auf 1.100°C mit einer Rate von nicht über 250°C/h, das anschließende Erhitzen des Grünkörpers auf eine Brenntemperatur von 1.350 - 1.440°C mit einer Rate von 30 - 300°C/h und das abschließende Halten des Grünkörpers auf der Brenntemperatur über eine Zeitspanne von 0,5 - 24 h umfaßt.

**Revendications**

1. Procédé de production d'une structure alvéolaire de cordiérite, comprenant les étapes de :

     préparation d'un lot de matériau de cordiérite dont les composants majeurs consistent en talc, kaolin, kaolin et alumine calcinés qui donnent collectivement une composition chimique consistant en 45 à 55% en poids de $SiO_2$, 32 à 40% en poids de $Al_2O_3$ et 12 à 15% en poids de MgO, ledit talc consistant en un mélange d'une première poudre de talc ayant un contenu en CaO de pas plus de 0,4% en poids et une taille de cristallite de pas plus de 10 $\mu$m, et d'une seconde poudre de talc ayant un contenu en CaO de pas plus de 0,4% en poids et une taille de cristallite de pas moins de 30 $\mu$m;

la formation d'un corps cru de ladite structure alvéolaire de cordiérite, par extrusion en utilisant ledit lot de matériau de cordiérite; et

la cuisson dudit corps cru dans ladite structure alvéolaire de cordiérite.

2. Procédé selon l'une quelconque des revendications 1 ou 2, dans lequel ladite étape de cuisson dudit corps cru comprend le chauffage dudit corps cru à 1100°C à un taux ne dépassant pas 250°C/heure, ensuite le chauffage dudit corps cru a une température de cuisson de 1350 à 1440°C à un taux de 30°C/heure à 300°C/heure, et finalement le maintien dudit corps cru à la température de cuisson pendant un temps de 0,5 heure à 24 heures.

FIG. 1

WATER ABSORPTION PERCENT (wt %)

RATIO OF TALC A / TALC C

THERMAL EXPANSION COEFFICIENT ($\times 10^{-6}/40 \sim 800\,^{\circ}C$)

RATIO OF TALC A / TALC C

FIG. 2

EXTRUDING DIRECTION

AXIS A

AXIS B

FIG. 3

THERMAL SHOCK RESISTANCE (°C)

FIG. 4

950

900

850

800

⁰/₁₀₀    ²⁰/₈₀    ⁴⁰/₆₀    ⁶⁰/₄₀    ⁸⁰/₂₀    ¹⁰⁰/₀

RATIO OF TALC A / TALC C